# EUROPÄISCHE PATENTANMELDUNG

(11) **EP 3 748 447 A1**
(43) Veröffentlichungstag der Anmeldung: **09.12.2020**
(21) Anmeldenummer: 19178645.8
(22) Anmeldetag: 06.06.2019
(51) Int. Cl.: G05B 19/418, G05B 17/02

(54) **VERFAHREN ZUR COMPUTER-IMPLEMENTIERTEN SIMULATION DES BETRIEBS EINER AUTOMATISIERUNGSANLAGE**

(71) Anmelder: Siemens Aktiengesellschaft, 80333 München (DE)
(72) Erfinder: Metz, Daniel, 76137 Karlsruhe (DE); Waltinger, Ulli, 86633 Neuburg (DE); Wurm, Kai, 81739 München (DE)

(57) **Zusammenfassung**

Die Erfindung betrifft ein Verfahren zur computerimplementierten Simulation des Betriebs einer Automatisierungsanlage (AT), welche eine Vielzahl von Komponenten (CO) umfasst, wobei
- eine digitale Repräsentation (RE) der Automatisierungsanlage (AT) bereitgestellt wird;
- eine Vielzahl von digitalen Parameterdatensätzen (PD1, PD2, PD3), welche jeweils einen oder mehrere Parameter enthalten und unterschiedliche Umgebungsbedingungen für den Betrieb der Automatisierungsanlage (AT) spezifizieren, bereitgestellt wird;
- jeder Parameterdatensatz (PD1, PD2, PD3) zumindest eines Teils der Vielzahl von Parameterdatensätzen (PD1, PD2, PD3) mit der Repräsentation (RE) der Automatisierungsanlage (AT) verknüpft wird und basierend auf der verknüpften Repräsentation (RE') durch Ausführung eines Simulationsprogramms (SIM) für jeden Parameterdatensatz (PD1, PD2, PD3) ein digitales Simulationsmodell (SM1, SM2, SM3) generiert wird, das den simulierten Betrieb der Automatisierungsanlage (AT) unter den Umgebungsbedingungen des jeweiligen Parameterdatensatzes (PD1, PD2, PD3) repräsentiert.

## Beschreibung

Aus dem Stand der Technik ist es bekannt, mit geeigneten Engineering-Werkzeugen eine Automatisierungsanlage gemäß spezifischen Vorgaben zu entwerfen. Auf diese Weise wird eine digitale Repräsentation der Automatisierungsanlage erzeugt, deren Betrieb anschließend mit bekannten Simulationsprogrammen simuliert werden kann. Dabei besteht das Problem, dass die digitale Repräsentation keine spezifischen Informationen über die Umgebungsbedingungen enthält, die beim Betrieb der Automatisierungsanlage vorliegen. Insbesondere können unterschiedliche Umgebungsbedingungen, wie z.B. unterschiedliche klimatische Gegebenheiten, Einfluss auf den mit der Anlage durchgeführten Automatisierungsprozess haben. Derzeit werden diese Einflussfaktoren manuell durch einen Benutzer als Eingangsgrößen des Simulationsprogramms spezifiziert.

Aufgabe der Erfindung ist es, ein Verfahren zur computer-implementierten Simulation des Betriebs einer Automatisierungsanlage zu schaffen, das auf einfache Weise ohne manuelle Spezifikation durch einen Benutzer unterschiedliche Umgebungsbedingungen für den Betrieb der Automatisierungsanlage berücksichtigt.

Diese Aufgabe wird durch das Verfahren gemäß Patentanspruch 1 bzw. die Vorrichtung gemäß Patentanspruch 10 gelöst. Weiterbildungen der Erfindung sind in den abhängigen Ansprüchen definiert.

Das erfindungsgemäße Verfahren dient zur computer-implementierten Simulation des Betriebs einer Automatisierungsanlage, welche eine Vielzahl von Komponenten umfasst. Hier und im Folgenden ist unter einer Automatisierungsanlage eine industrielle Anlage zu verstehen, welche einen beliebigen Prozess automatisiert durchführt. Insbesondere kann es sich bei dem Prozess um die Fertigung bzw. Herstellung eines Produkts handeln. Nichtsdestotrotz kann eine Automatisierungsanlage auch eine logistische Anlage darstellen.

Im Rahmen des erfindungsgemäßen Verfahrens wird eine digitale Repräsentation der Automatisierungsanlage bereitgestellt. Mit anderen Worten greift das erfindungsgemäße Verfahren auf eine vorab gespeicherte digitale Repräsentation zurück. Neben der digitalen Repräsentation wird im erfindungsgemäßen Verfahren eine Vielzahl von digitalen Parameterdatensätzen bereitgestellt. Das heißt, das erfindungsgemäße Verfahren hat Zugriff auf diese digitalen Parameterdatensätze. Ein jeweiliger Parameterdatensatz spezifiziert einen oder mehrere Parameter und beschreibt hierdurch Umgebungsbedingungen für den Betrieb der Automatisierungsanlage. Die Umgebungsbedingungen unterscheiden sich zwischen den verschiedenen Parameterdatensätzen, d.h. zumindest ein Parameter ist zwischen den Parameterdatensätzen unterschiedlich.

Unter Umgebungsbedingungen sind Größen zu verstehen, die den Betrieb der Automatisierungsanlage am Ort ihrer Installation beeinflussen. Vorzugsweise sind die Umgebungsbedingungen an unterschiedliche Standorte gekoppelt, an denen die Automatisierungsanlage installiert werden soll. Alternativ oder zusätzlich können sich unterschiedliche Umgebungsbedingungen auch durch den Betrieb der Automatisierungsanlage bei unterschiedlichem Wetter oder zu unterschiedlicher Tageszeit oder Jahreszeit ergeben.

In einer bevorzugten Variante umfasst ein jeweiliger Parametersatz klimatische und/oder geographische und/oder geologische Umgebungsbedingungen. Klimatische Umgebungsbedingungen betreffen insbesondere Temperatur, Luftfeuchtigkeit, Sonneneinstrahlung und dergleichen. Geographische Umgebungsbedingungen können sich z.B. auf die Höhe oder das Höhenprofil am Standort der Automatisierungsanlage und/oder die Bebauung bzw. Vegetation im Umfeld der Automatisierungsanlage beziehen. Geologische Umgebungsbedingungen können beispielsweise die seismische Aktivität am Standort der Automatisierungsanlage, wie die Wahrscheinlichkeit des Auftretens von Erdbeben, umfassen.

Je nach Ausgestaltung können die Umgebungsbedingungen eines entsprechenden Parametersatzes dauerhaft gültig sein und/oder auch nur für den vorbestimmten Zeitraum. Beispielsweise kann der vorbestimmte Zeitraum eine bestimmte Tageszeit oder einen Zeitraum in einem Jahr, wie z.B. eine bestimmte Jahreszeit, festlegen.

Erfindungsgemäß wird jeder Parameterdatensatz zumindest eines Teils der Vielzahl von Parameterdatensätzen mit der digitalen Repräsentation der Automatisierungsanlage verknüpft. Basierend auf der verknüpften Repräsentation wird dann durch Ausführung eines Simulationsprogramms für jeden Parameterdatensatz ein digitales Simulationsmodell generiert, das den simulierten Betrieb der Automatisierungsanlage unter den Umgebungsbedingungen des jeweiligen Parameterdatensatzes repräsentiert. Entsprechende Simulationsprogramme sind an sich bekannt und werden deshalb nicht weiter im Detail erläutert.

Das erfindungsgemäße Verfahren weist den Vorteil auf, dass automatisiert der Betrieb der Automatisierungsanlage für unterschiedliche Umgebungsbedingungen simuliert werden kann. Es ist somit nicht erforderlich, dass ein Benutzer manuell entsprechende Umgebungsbedingungen spezifiziert. Vielmehr sind die Umgebungsbedingungen bereits vorab festgelegt und sie können für digitale Repräsentationen unterschiedlicher Automatisierungsanlagen genutzt werden.

In einer besonders bevorzugten Ausführungsform stammt die digitale Repräsentation der Automatisierungsanlage aus einem Engineering-Programm bzw. Engineering-Tool, mit dem ein Benutzer Automatisierungsanlagen entwirft. Mit anderen Worten ist das Verfahren an ein entsprechendes Engineering-Programm gekoppelt, so dass unmittelbar nach Erstellung der digitalen Repräsentation der Betrieb der Automatisierungsanlage für unterschiedliche Umgebungsbedingungen simuliert werden kann.

In einer weiteren bevorzugten Ausgestaltung des erfindungsgemäßen Verfahrens erfolgt die Verknüpfung jedes Parameterdatensatzes mit der Repräsentation der Automatisierungsanlage derart, dass die jeweiligen Komponenten der Automatisierungsanlage mit einem oder mehreren Parametern aus dem jeweiligen Parameterdatensatz instantiiert werden. Diese Ausführungsform ermöglicht eine einfache Implementierung des erfindungsgemäßen Verfahrens.

In einer weiteren Variante des erfindungsgemäßen Verfahrens ist zumindest ein Teil der Parameterdatensätze lokal auf einem Speicher am Ort eines Rechners gespeichert, auf dem das Simulationsprogramm ausgeführt wird. Alternativ oder zusätzlich ist es auch möglich, dass zumindest ein Teil der Parameterdatensätze in einem Cloudspeicher gespeichert ist.

In einer weiteren Ausführungsform des erfindungsgemäßen Verfahrens wird eine Benutzerschnittstelle bereitgestellt, über welche ein Benutzer auswählen kann, für welche Parameterdatensätze der Vielzahl von Parameterdatensätzen ein Simulationsmodell generiert werden soll. Der Benutzer kann somit vorab festlegen, für welche Umgebungsbedingungen der Betrieb der Automatisierungsanlage überhaupt relevant ist. Die Benutzerschnittstelle kann als visuelle Anzeigeeinheit oder auch auf andere Weise realisiert sein.

In einer weiteren Ausgestaltung des erfindungsgemäßen Verfahrens wird basierend auf dem oder den generierten Simulationsmodellen eine Ausgabe auf einer Benutzerschnittstelle generiert, welche Informationen zum simulierten Betrieb der Automatisierungsanlage unter den Umgebungsbedingungen der jeweiligen Parameterdatensätze des oder der generierten Simulationsmodelle enthält. Diese Benutzerschnittstelle kann ggf. mit der oben beschriebenen Benutzerschnittstelle zur Auswahl der Parameterdatensätze zusammenfallen. Die Benutzerschnittstelle kann wiederum als visuelle Anzeigeeinheit oder auch auf andere Weise realisiert sein.

Neben dem oben beschriebenen Verfahren betrifft die Erfindung eine Vorrichtung zur computer-implementierten Simulation des Betriebs einer Automatisierungsanlage. Diese Vorrichtung umfasst ein Mittel zur Bereitstellung einer digitalen Repräsentation der Automatisierungsanlage. Ferner ist ein Mittel zur Bereitstellung einer Vielzahl von digitalen Parametersätzen vorgesehen, wobei die Parameterdatensätze jeweils einen oder mehrere Parameter enthalten und hierdurch unterschiedliche Umgebungsbedingungen (d.h. sich zwischen den Parameterdatensätzen in zumindest einem Parameter unterscheidende Umgebungsbedingungen) für den Betrieb der Automatisierungsanlage spezifizieren. Die Vorrichtung enthält darüber hinaus ein Mittel zur Verknüpfung jedes Parameterdatensatzes zumindest eines Teils der Vielzahl von Parameterdatensätzen mit der Repräsentation der Automatisierungsanlage. Ferner ist in der Vorrichtung ein Simulationsprogramm vorgesehen, welches derart ausgestaltet ist, dass durch dessen Ausführung basierend auf der verknüpften Repräsentation für jeden Parameterdatensatz ein digitales Simulationsmodell generiert wird, das den simulierten Betrieb der Automatisierungsanlage unter den Umgebungsbedingungen des jeweiligen Parameterdatensatzes repräsentiert.

Die erfindungsgemäße Vorrichtung ist vorzugsweise derart ausgestaltet, dass sie zur Ausführung einer oder mehrerer bevorzugter Varianten des erfindungsgemäßen Verfahrens konfiguriert ist.

Die Erfindung betrifft darüber hinaus ein Computerprogrammprodukt mit einem auf einem maschinenlesbaren Träger gespeicherten Programmcode zur Durchführung des erfindungsgemäßen Verfahrens bzw. einer oder mehrerer bevorzugter Ausführungsformen des erfindungsgemäßen Verfahrens, wenn der Programmcode auf einem Computer ausgeführt wird.

Darüber hinaus umfasst die Erfindung ein Computerprogramm mit einem Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Ein Ausführungsbeispiel der Erfindung wird nachfolgend anhand der beigefügten Figuren detailliert beschrieben.

Es zeigen:
- Fig. 1: eine schematische Darstellung des Ablaufs einer Variante des erfindungsgemäßen Verfahrens; und
- Fig. 2: eine schematische Darstellung einer Vorrichtung zur Durchführung des Verfahrens der Fig. 1.

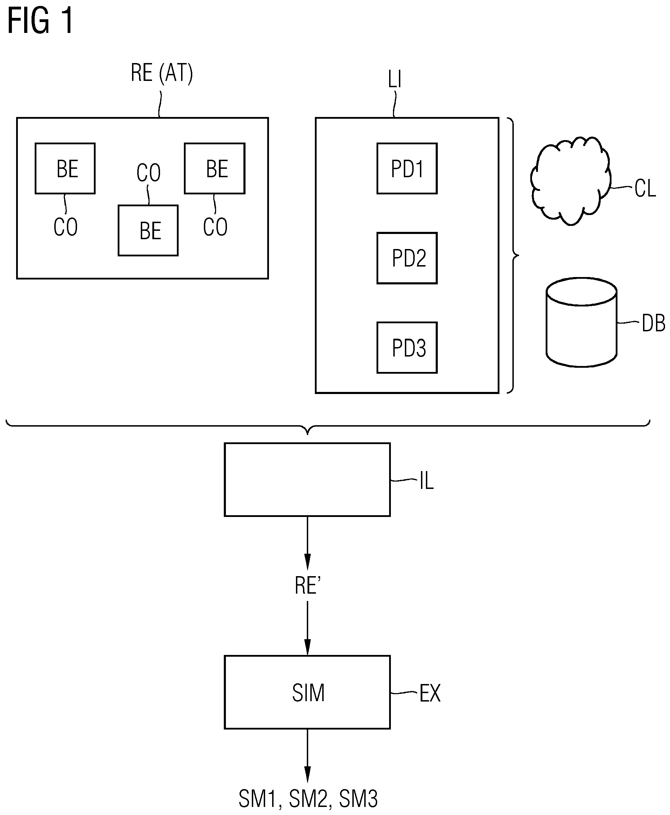

Das Verfahren der Fig. 1 ist ein computer-implementiertes Verfahren, das auf einem Rechner ausgeführt wird. Ausgangspunkt des Verfahrens ist eine digitale Repräsentation RE einer Automatisierungsanlage AT, die aus einem Speicher ausgelesen wird. Es kann sich bei der Automatisierungsanlage um eine beliebige Anlage zur Ausführung eines automatisch ablaufenden Prozesses handeln. Im hier beschriebenen Ausführungsbeispiel dient die Anlage zur Fertigung bzw. Herstellung eines Produkts.

Die Anlage AT wird basierend auf digitalen Daten durch die Repräsentation RE beschrieben, welche die einzelnen Komponenten CO der Automatisierungsanlage spezifiziert. Die Komponenten CO werden wiederum durch jeweilige individuelle Verhaltenstypen BE beschrieben. Die digitale Repräsentation RE wurde in der Ausführungsform der Fig. 1 im Vorfeld unter Mitwirkung eines Benutzers mithilfe eines Engineering-Tools generiert und spezifiziert den Aufbau einer bestimmten Automatisierungsanlage, die für einen Kunden gebaut werden soll. Die digitale Repräsentation RE berücksichtigt dabei nicht Umgebungsbedingungen bzw. Umwelteinflüsse, die je nach Standort der Automatisierungsanlage unterschiedlich sein können. Beispielsweise können unterschiedliche klimatische Bedingungen, wie Temperatur oder Luftfeuchtigkeit, Einfluss auf den Betrieb der Automatisierungsanlage haben und dazu führen, dass das herzustellende Produkt mit der Automatisierungsanlage nicht oder nur mit Einschränkungen produziert werden kann.

Um den Betrieb der Automatisierungsanlage AT automatisiert für unterschiedliche Umgebungsbedingungen an verschiedenen möglichen Standorten der Automatisierungsanlage zu simulieren, greift das Verfahren der Fig. 1 auf mehrere Parameterdatensätze PD1, PD2 und PD3 zurück, die Bestandteil einer Bibliothek LI sind. Diese Parameterdatensätze können je nach Ausgestaltung aus einem Cloudspeicher CL und/oder einer lokalen Datenbank DB am Ort des Rechners ausgelesen werden, der das Verfahren der Fig. 1 durchführt.

Gemäß dem Schritt IL (IL = Interlink) der Fig. 1 wird die digitale Repräsentation RE der Automatisierungsanlage AT separat mit jedem der Parameterdatensätzen PD1 bis PD3 verknüpft. Jeder Parameterdatensatz beschreibt dabei unterschiedliche Umgebungsbedingungen, die an verschiedenen Standorten vorliegen, an denen die Anlage AT im Betrieb genommen werden soll. In der hier beschriebenen Ausführungsform spezifizieren die Parameterdatensätze unterschiedliche klimatische Bedingungen an den verschiedenen Standorten, wie unterschiedliche Temperatur, unterschiedlichen Luftdruck, unterschiedliche Luftfeuchtigkeit und dergleichen. Ferner können die Umgebungsbedingungen unterschiedliche geographische Bedingungen umfassen, wie das Höhenprofil und/oder die Bebauung und/die Vegetation am entsprechenden Standort. Ferner können die unterschiedlichen Umgebungsbedingungen auch geologische Bedingungen, wie z.B. die Wahrscheinlichkeit des Auftretens von Erdbeben, umfassen. Gegebenenfalls können die Umgebungsbedingungen auch temporär, z.B. während einer bestimmten Tageszeit oder einer bestimmten Jahreszeit, gültig sein, was insbesondere bei klimatischen Umgebungsbedingungen der Fall ist.

Im Schritt IL wird die digitale Repräsentation RE mit den jeweiligen Parameterdatensätzen PD1 bis PD3 dadurch verknüpft, dass jede Komponente CO der Automatisierungsanlage AT mit entsprechenden Parametern aus den jeweiligen Parameterdatensätzen instantiiert wird. Man erhält auf diese Weise unterschiedliche verknüpfte digitale Repräsentationen, die in Fig. 1 alle mit dem gemeinsamen Bezugszeichen RE' bezeichnet sind. Anschließend wird in Schritt EX ein an sich bekanntes Simulationsprogramm SIM für jede der verknüpften digitalen Repräsentationen ausgeführt. Das Simulationsprogramm simuliert dabei den Betrieb der Automatisierungsanlage unter Berücksichtigung der entsprechenden Parameterdatensätze PD1 bis PD3. Als Ergebnis erhält man ein digitales Simulationsmodell SM1 für den Parametersatz PD1, ein digitales Simulationsmodell SM2 für den Parametersatz PD2 und ein digitales Simulationsmodell SM3 für den Parametersatz PD3.

Die jeweiligen Simulationsmodelle SM1 bis SM3 repräsentieren den simulierten Betrieb der Automatisierungsanlage. Über eine geeignete Benutzerschnittstelle kann ein Benutzer die jeweiligen Simulationsmodelle aufrufen bzw. sich deren Ergebnisse ausgeben lassen. Die Ergebnisse enthalten dabei die Information, ob der Betrieb der Automatisierungsanlage ordnungsgemäß abläuft und zu der Herstellung des gewünschten Produkts führt.

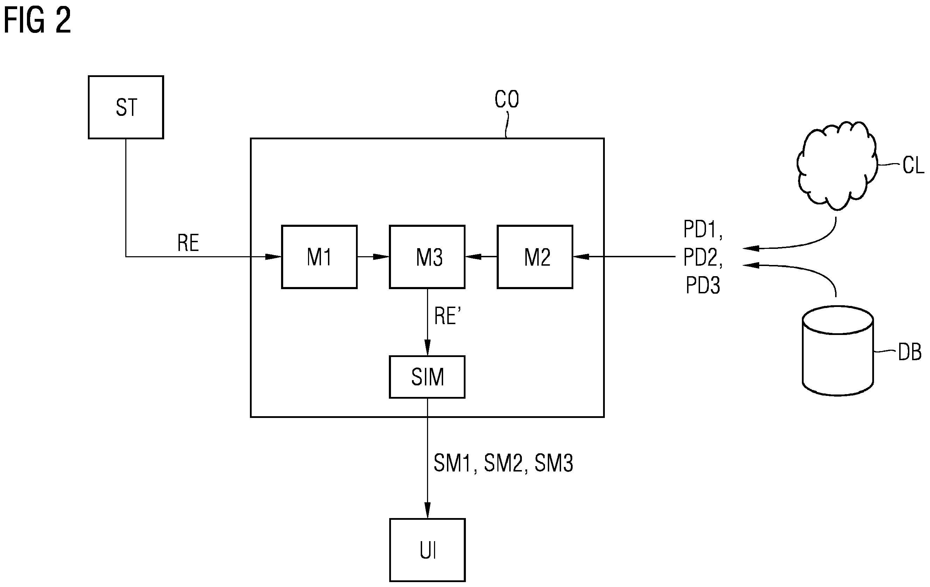

Fig. 2 zeigt eine schematische Darstellung, die eine Vorrichtung zur Durchführung des Verfahrens der Fig. 1 verdeutlicht. Wie bereits oben erwähnt, werden die Schritte des Verfahrens der Fig. 1 durch einen Rechner bzw. Computer durchgeführt, der in Fig. 2 mit CO bezeichnet ist. Der Computer CO liest aus einem entsprechenden Speicher ST die digitale Repräsentation RE der Automatisierungsanlage AT mit einem Mittel M1 aus. Der Speicher kann ein lokaler Speicher des Computers CO und ggf. auch ein Cloudspeicher sein. Darüber hinaus liest der Computer mit einem Mittel M2 die Parameterdatensätze PD1, PD2 und PD3 aus dem Cloudspeicher CL und/oder der lokalen Datenbank DB aus. Mit einem Mittel M3 verknüpft der Computer die Repräsentation RE mit den jeweiligen Parameterdatensätzen PD1 bis PD3, wodurch entsprechende verknüpfte digitale Repräsentationen RE' erhalten werden.

In dem Computer CO ist ferner das Simulationsprogramm SIM implementiert. Dieses Programm erhält die verknüpften digitalen Repräsentationen RE' als Eingangsgrößen und ermittelt die entsprechenden Simulationsmodelle SM1, SM2 und SM3. Über eine mit dem Computer CO verknüpfte Benutzerschnittstelle UI, die vorzugsweise eine visuelle Anzeigeeinheit umfasst, werden dann Informationen zu den Simulationsmodellen bzw. deren Ergebnisse ausgegeben, wie bereits im Zusammenhang mit Fig. 1 erläutert wurde.

In der im Vorangegangenen beschriebenen Ausführungsform wurden Simulationsmodelle für alle digitalen Parameterdatensätze PD1 bis PD3 ermittelt. In einer abgewandelten Ausführungsform ist es auch möglich, dass ein Benutzer über eine geeignete Benutzerschnittstelle spezifizieren kann, für welche der Parameterdatensätze er die Erstellung eines Simulationsmodells wünscht. Entscheidend ist dabei, dass mehrere unterschiedliche Parameterdatensätze für unterschiedliche Umgebungsbedingungen zur Auswahl stehen.

Die im Vorangegangenen beschriebene Ausführungsform der Erfindung weist eine Reihe von Vorteilen auf. Insbesondere wird erstmalig die Möglichkeit geschaffen, die digitale Repräsentation einer Automatisierungsanlage automatisch für unterschiedliche Umgebungsbedingungen zu verifizieren. Die entsprechenden Umgebungsbedingungen wurden dabei bereits im Vorfeld ermittelt und geeignet gespeichert. Im Unterschied zum Stand der Technik ist es somit nicht mehr erforderlich, dass die Umgebungsbedingungen manuell durch einen Benutzer für unterschiedliche Standorte ermittelt werden bzw. manuell durch einen Benutzer als Eingangsparameter für das Simulationsmodell eingegeben werden.

## Patentansprüche

1. Verfahren zur computer-implementierten Simulation des Betriebs einer Automatisierungsanlage (AT), welche eine Vielzahl von Komponenten (CO) umfasst, wobei
- eine digitale Repräsentation (RE) der Automatisierungsanlage (AT) bereitgestellt wird;
- eine Vielzahl von digitalen Parameterdatensätzen (PD1, PD2, PD3), welche jeweils einen oder mehrere Parameter enthalten und unterschiedliche Umgebungsbedingungen für den Betrieb der Automatisierungsanlage (AT) spezifizieren, bereitgestellt wird;
- jeder Parameterdatensatz (PD1, PD2, PD3) zumindest eines Teils der Vielzahl von Parameterdatensätzen (PD1, PD2, PD3) mit der Repräsentation (RE) der Automatisierungsanlage (AT) verknüpft wird und basierend auf der verknüpften Repräsentation (RE') durch Ausführung eines Simulationsprogramms (SIM) für jeden Parameterdatensatz (PD1, PD2, PD3) ein digitales Simulationsmodell (SM1, SM2, SM3) generiert wird, das den simulierten Betrieb der Automatisierungsanlage (AT) unter den Umgebungsbedingungen des jeweiligen Parameterdatensatzes (PD1, PD2, PD3) repräsentiert.

2. Verfahren nach Anspruch 1, wobei die Repräsentation (RE) der Automatisierungsanlage (AT) aus einem Engineering-Programm zum Entwurf von Automatisierungsanlagen stammt.

3. Verfahren nach Anspruch 1 oder 2, wobei die Verknüpfung jedes Parameterdatensatzes (PD1, PD2, PD3) mit der Repräsentation (RE) der Automatisierungsanlage (AT) derart erfolgt, dass die jeweiligen Komponenten (CO) der Automatisierungsanlage (AT) mit einem oder mehreren Parametern aus dem jeweiligen Parameterdatensatz (PD1, PD2, PD3) instantiiert werden.

4. Verfahren nach einem der vorhergehenden Ansprüche, wobei ein jeweiliger Parameterdatensatz (PD1, PD2, PD3) klimatische und/oder geographische und/oder geologische Umgebungsbedingungen spezifiziert.

5. Verfahren nach einem der vorhergehenden Ansprüche, wobei ein jeweiliger Parameterdatensatz (PD1, PD2, PD3) Umgebungsbedingungen umfasst, welche für einen vorbestimmten Zeitraum und/oder dauerhaft gültig sind.

6. Verfahren nach einem der vorhergehenden Ansprüche, wobei zumindest ein Teil der Parameterdatensätze (PD1, PD2, PD3) lokal auf einem Speicher (DB) am Ort eines Rechners (CO) gespeichert ist, auf dem das Simulationsprogramm (SIM) ausgeführt wird.

7. Verfahren nach einem der vorhergehenden Ansprüche, wobei zumindest ein Teil der Parameterdatensätze (PD1, PD2, PD3) in einem Cloudspeicher (CL) gespeichert ist.

8. Verfahren nach einem der vorhergehenden Ansprüche, wobei eine Benutzerschnittstelle (UI) bereitgestellt wird, über welche ein Benutzer auswählen kann, für welche Parameterdatensätze (PD1, PD2, PD3) der Vielzahl von Parameterdatensätzen (PD1, PD2, PD3) ein Simulationsmodell (SM1, SM2, SM3) generiert werden soll.

9. Verfahren nach einem der vorhergehenden Ansprüche, wobei basierend auf dem oder den generierten Simulationsmodellen (SM1, SM2, SM3) eine Ausgabe auf einer Benutzerschnittstelle (UI) generiert wird, welche Informationen zum simulierten Betrieb der Automatisierungsanlage (AT) unter den Umgebungsbedingungen der jeweiligen Parameterdatensätze (PD1, PD2, PD3) des oder der generierten Simulationsmodelle (SM1, SM2, SM3) enthält.

10. Vorrichtung zur computer-implementierten Simulation des Betriebs einer Automatisierungsanlage (AT), umfassend
- ein Mittel (M1) zur Bereitstellung einer digitalen Repräsentation (RE) der Automatisierungsanlage (AT);
- ein Mittel (M2) zur Bereitstellung einer Vielzahl von digitalen Parameterdatensätzen (PD1, PD2, PD3), welche jeweils einen oder mehrere Parameter enthalten und unterschiedliche Umgebungsbedingungen für den Betrieb der Automatisierungsanlage (AT) spezifizieren;
- ein Mittel (M3) zur Verknüpfung jedes Parameterdatensatzes (PD1, PD2, PD3) zumindest eines Teils der Vielzahl von Parameterdatensätzen (PD1, PD2, PD3) mit der Repräsentation (RE) der Automatisierungsanlage (AT);
- ein Simulationsprogramm (SIM), welches derart ausgestaltet ist, dass durch dessen Ausführung basierend auf der verknüpften Repräsentation (RE') für jeden Parameterdatensatz (PD1, PD2, PD3) ein digitales Simulationsmodell (SM1, SM2, SM3) generiert wird, das den simulierten Betrieb der Automatisierungsanlage (AT) unter den Umgebungsbedingungen des jeweiligen Parameterdatensatzes (PD1, PD2, PD3) repräsentiert.

11. Vorrichtung nach Anspruch 10, wobei die Vorrichtung zur Ausführung eines Verfahrens nach einem der Ansprüche 2 bis 9 konfiguriert ist.

12. Computerprogrammprodukt mit einem auf einem maschinenlesbaren Träger gespeicherten Programmcode zur Durchführung eines Verfahrens nach einem der Ansprüche 1 bis 9, wenn der Programmcode auf einem Computer ausgeführt wird.

13. Computerprogramm mit einem Programmcode zur Durchführung eines Verfahrens nach einem der Ansprüche 1 bis 9, wenn der Programmcode auf einem Computer ausgeführt wird.
